# EUROPÄISCHE PATENTANMELDUNG

(11) **EP 1 674 835 A1**
(43) Veröffentlichungstag der Anmeldung: **28.06.2006**
(21) Anmeldenummer: 04030822.3
(22) Anmeldetag: 27.12.2004
(51) Int. Cl.: G01D 11/30

(54) **Sondenhalterungssystem, Verfahren zum Befestigen eines Sondenhalterungssystems und Verfahren zum Justieren einer Sonde**

(71) Anmelder: SIEMENS AKTIENGESELLSCHAFT, 80333 München (DE)
(72) Erfinder: Janz, Fredi, 47445 Moers (DE); Mikulec, Vinko, 47051 Duisburg (DE)

(57) **Zusammenfassung**

Ein Sondenhalterungssystem (1) zur Befestigung einer Sonde (2) an einem Gehäuse (4) soll bei einem einfach gehaltenen Aufbau eine möglichst einfache und genaue Positionierung der Sonde (2) bezüglich eines Messobjektes ermöglichen. Dazu ist erfindungsgemäß eine ein Innengewinde aufweisende Gewindehülse (16) mit einem in die Gewindehülse (16) schraubbaren Trägerstab (8) für die Sonde (2) vorgesehen, wobei die Gewindehülse in eine Referenzposition in einer zugeordneten Ausnehmung (10) der Gehäusewand einbringbar ist und über ein Feststellelement arretierbar ist.

## Beschreibung

Die Erfindung bezieht sich auf ein Sondenhalterungssystem zur Befestigung einer Sonde an einer Gehäusewand. Sie betrifft weiterhin ein Verfahren zum Befestigen eines derartigen Sondenhalterungssystems an einer Gehäusewand und ein Verfahren zum Justieren einer an einem derartigen Sondenhalterungssystem befestigten Sonde.

Bei Getrieben, Motoren, Einwellen- und Getriebeverdichtern können Sonden zur Wellenüberwachung eingesetzt werden. Dabei wird z. B. eine Wellenschwingungsmessung, eine Drehzahlmessung oder eine Wellenstandsmessung vorgenommen. In einem weiteren Sinne umfasst eine derartige Sonde üblicherweise einen an einem Sondenträger angeordneten Sondenkopf mit einem Messfühler zur eigentlichen Erfassung der Messwerte. Vielfach wird auch dieser Messfühler selbst in einem engeren Sinne als Sonde bezeichnet. Der Sondenträger besitzt häufig eine stab- oder röhrenförmige Gestalt, so dass er auch bei vergleichsweise beengten Raumverhältnissen auf relativ einfache Weise durch eine Zugriffsöffnung eines die zu überwachende Welle umgebenden Gehäuses geführt und bei Bedarf, insbesondere zu Wartungszwecken, aus ihr auch wieder entnommen werden kann, Somit kann der Sondenkopf oder der Messfühler in seine Arbeitsposition an einer vergleichsweise schlecht zugänglichen Stelle des Gehäuseinnenraumes gebracht werden, ohne dass das Gehäuse zu diesem Zweck zerlegt oder Teile davon abmontiert werden müssen.

Für eine möglichst genaue Durchführung der Messung, insbesondere zur Vermeidung von systematischen Messfehlern, muss der Messfühler in der Regel sehr dicht und mit einer hohen Genauigkeit an der Welle positioniert sein. Die zulässige Toleranz zur Solldistanz in radialer oder axialer Richtung beträgt oftmals nur einen Bruchteil eines Millimeters. Daher ist eine präzise zu justierende und sicher mit dem Gehäuse verbindbare Befestigungsvorrichtung für die Sonde bzw. den Sondenträger erforderlich. Die Montage einer derartigen Vorrichtung erfolgt in der Regel nach dem Zusammenbau des Gehäuses bzw. der Maschine vom außen. Unter Umständen ist auch eine nachträgliche Anpassung der Sondenposition an veränderte Betriebsbedingungen der Maschine notwendig.

Bei bekannten Sondenhalterungen wird üblicherweise ein Einschraubstutzen mit Außengewinde in eine Bohrung des Wellengehäuses eingeschraubt und mit einer Rohrmutter fest am Gehäuse gekontert. Dabei kann zwischen der Rohrmutter und dem Gehäuse eine Gewindedichtung vorgesehen sein. Die eigentliche Messsonde bzw. der Messfühler ist dabei in der Regel an einem Trägerstab angeordnet, der zur Montage in den Einschraubstutzen eingebracht und an ihm mit einer Überwurfmutter derart fixiert wird, dass die Solldistanz des Messfühlers zur Welle oder zum jeweiligen Messobjekt näherungsweise erreicht ist. Eine Feinjustierung der Anordnung lässt sich dann bei gelöster Rohrmutter durch Verdrehen des Einschraubstutzens in der Gewindebohrung der Gehäusewand vornehmen.

Ein grundlegendes Problem der beschriebenen Anordnung besteht jedoch darin, dass die Feinjustierung jedes Mal neu vorgenommen werden muss, nachdem die Sonde zuvor zu Wartungs- oder zu Reinigungszwecken oder dergleichen aus dem Gehäuse entfernt und anschließend wieder eingesetzt wurde. Zudem gestaltet sich die Justierung selbst als vergleichsweise schwierig und aufwendig, da beim Anziehen der Rohrmutter sich oftmals auch der Einschraubstutzen wieder aus der zuvor mühsam ermittelten Sollposition verdreht. Bei Maschinen mit einer Vielzahl derartiger Messsonden kann der mit der Neujustierung verbundene Zeitverlust erheblich sein. Bei einer Maschine mit 20 Messsonden kann er beispielsweise bis zu einem Tag betragen.

Nachteilig ist an dieser Anordnung weiterhin, dass im Falle einer in einem Ölbad gelagerten Welle der Trägerstab und der Einschraubstutzen zur Erreichung einer hohen Öldichtigkeit sehr maßgenau mit einer Spielpassung zueinander gefertigt werden müssen, was relativ kostenintensiv ist. Trotzdem sind bei dieser Realisierung einer Sondenhalterung bereits Dichtungsprobleme aufgetreten. Ein weiterer Nachteil der Anordnung ist, dass ihr Verstellbereich durch die Länge des Einschraubstutzens begrenzt ist, so dass für einen Einsatz der Sonde an verschiedenen Messstellen eine Mehrzahl an Halterungen notwendig sein kann.

Der Erfindung liegt daher die Aufgabe zugrunde, ein Sondenhalterungssystem zur Befestigung einer Sonde an einer Gehäusewand anzugeben, das bei einem einfach gehaltenen Aufbau eine möglichst einfache und genaue Positionierung der Sonde ermöglicht. Außerdem sollen ein Verfahren zum Befestigen eines derartigen Sondenhalterungssystems an einer Gehäusewand und ein Verfahren zum Justieren einer an einem derartigen Sondenhalterungssystem angeordneten Sonde angegeben werden.

Bezüglich des Sondenhalterungssystems wird diese Aufgabe gelöst durch eine ein Innengewinde aufweisende Gewindehülse und einen in die Gewindehülse schraubbaren Trägerstab für die Sonde, wobei die Gewindehülse in eine Referenzposition in einer Ausnehmung der Gehäusewand einbringbar ist und in dieser über ein Feststellelement arretierbar ist.

Die Erfindung geht dabei von der Überlegung aus, dass zur Verringerung des Wartungsaufwandes eine lediglich einmalige Justierung und Ausrichtung der Sonde bei der Erstmontage des Sondenhalterungssystems notwendig sein sollte. Wenn die Sonde bzw. die gesamte Sondenhalterung zu Wartungszwecken aus dem Gehäuse, an dem sie befestigt ist, entnommen und anschließend wieder eingesetzt wird, sollte ihre ursprüngliche, d. h. die bereits kalibrierte, Position besonders leicht reproduzierbar sein. Ein zeitaufwendiges Nachjustieren sollte entfallen.

Ferner sollte eine unbeabsichtigte Verrückung oder Verdrehung der Sonde aus einer einmal erreichten Referenzposition unterbunden sein, wenn bei der ersten oder einer wiederholten Montage der Sondenhalterung anfänglich noch gelockerte Befestigungsmittel angezogen oder verriegelt werden. Damit es zu keiner störenden wechselseitigen Beeinflussung des Befestigungsvorganges und des Justiervorgangs bzw. der Feinjustierung kommt, sollten daher die Grundfunktionen des Sondenhalterungssystems, nämlich "Befestigen" (bzw. "Arretieren") und "Justieren" (bzw. "Kalibrieren") bereits konstruktions- oder bauartbedingt voneinander entkoppelt sein.

Zu diesem Zweck ist der Trägerstab für die Sonde in eine Gewindehülse geschraubt, so dass sich durch Verdrehen des Trägerstabes gegenüber der Gewindehülse die Position des endseitig am Trägerstab angeordneten Sondenkopfes mit dem Messfühler justieren lässt. Die Gewindehülse wird bei am Gehäuse montierten Sondenhalterungssystem durch ein auf sie einwirkendes Feststellelement in einer Referenzposition in einer der jeweiligen Messstelle zugeordneten Ausnehmung der Gehäusewand arretiert. Das Feststellelement ist daher nicht unmittelbar, sondern über die Gewindehülse nur mittelbar mit dem Trägerstab verbunden. Dadurch wird eine Entkoppelung der Befestigungsfunktion von der Justierfunktion erreicht. Beim Arretiervorgang auftretende Kräfte oder Drehmomente werden lediglich von der Gewindehülse aufgenommen und nicht an den Trägerstab weitergegeben, so dass eine einmal erreichte Feinjustierung des Trägerstabs in der Gewindehülse nicht versehentlich durch die Einwirkung des Feststellelementes wieder zerstört werden kann. Indem die Gewindehülse und der Trägerstab eine Einheit bilden, die als solche in einer reversiblen Weise aus der Ausnehmung der Gehäusewand entnehmbar ist (z. B. zu Wartungszwecken), ist beim anschließenden Wiedereinbau eine automatische und exakte Reproduzierbarkeit des ursprünglichen Abstandes vom am Trägerstab angebrachten Messfühler zum Messobjekt gewährleistet.

Vorteilhafterweise wird die Referenzposition der Gewindehülse beim montierten Sondenhalterungssystem durch eine in der Ausnehmung der Gehäusewand vorgesehene Anschlagfläche für die Gewindehülse festgelegt.

Ein derartiger Anschlag, der die maximale Einschubtiefe für die Gewindehülse begrenzt, kann beispielsweise durch einen in die Ausnehmung der Gehäusewand eingesetzten und mit ihr fest verbundenen umlaufenden Steg oder Ring gebildet sein. Vorteilhafterweise ist jedoch die Anschlagfläche direkt in die Kontur der Ausnehmung integriert. Dazu weist die Ausnehmung eine Übergangsstelle mit einem sich verengenden Innenquerschnitt auf, wobei der Abschnitt oder der Teilkanal mit dem geringeren Innenquerschnitt dem Gehäuseinneren zugewandt ist und eine Durchführung des Trägerstabes mit der kopfseitig angeordneten Sonde oder dem Messfühler ermöglicht. Der im Vergleich dazu größere Innenquerschnitt des zur Außenseite des Gehäuses orientierten Teilabschnittes der Ausnehmung bzw. des äußeren Teilkanals ist auf den Außenquerschnitt der Gewindehülse abgestimmt, welche bis zur durch den Verjüngungsabschnitt der Ausnehmung festgelegten Anschlagposition einbringbar ist. Dabei ist mit "Innenseite" die der zu überwachenden Welle oder dem Messobjekt zugewandte Seite und mit "Außenseite" die davon abgewandte Seite der Gehäusewand gemeint, wobei die Montage und die Justierung der Sondenhalterung von außen erfolgt. Es ist jedoch nicht unbedingt vorausgesetzt, dass das Gehäuse insgesamt einen vollständig abgeschlossenen Innenraum umgibt. Vielmehr kann das Gehäuse oder Verkleidung der Maschine an anderer Stelle auch zur Umgebung hin geöffnet sein.

In einer besonders vorteilhaften Ausgestaltung weist der Verjüngungsabschnitt der Ausnehmung eine trichterförmige Gestalt auf, wobei vorteilhafterweise die Außenkontur der Gewindehülse, insbesondere an ihrer zum Verjüngungsabschnitt der Ausnehmung gerichteten Stirnseite, an die Form der Ausnehmung angepasst ist. Durch die aufeinander abgestimmte Kontur des Verjüngungsabschnittes und der Stirnfläche der Gewindehülse ist ein selbstzentrierendes Einbringen der Gewindehülse in ihre Referenzposition in der Ausnehmung ermöglicht. Das bei geeigneter Spielpassung weitestgehend plane Auf- bzw. Anliegen an der Anschlagfläche und an der Seitenwand der Ausnehmung begünstigt einen kippsicheren Sitz der Gewindehülse, wobei evtl. angreifende Auflagekräfte gleichmäßig auf dem Umfang der Auflagefläche verteilt werden. Gegebenenfalls ist auch der Trägerstab zur Unterstützung eines festen zentrischen Sitzes mit einer Spielpassung zu dem nach innen gerichteten Teilabschnitt der Ausnehmung in der Gehäusewand gefertigt. Die sich konisch verjüngende Anschlagfläche der Ausnehmung wird auf einfache Weise beispielsweise mit einer entsprechend geformten Norm-Bohrerspitze hergestellt.

Vorzugsweise weist die Anschlagfläche der Gehäusewand oder die zur Anschlagfläche gerichtete Stirnseite der Gewindehülse eine umlaufende Aussparung zur Aufnahme eines Dichtringes auf, in der zweckmäßigerweise ein Dichtring positioniert ist. Auf diese Weise lässt sich eine sichere, insbesondere öldichte, Abdichtung der Gewindehülse gegenüber der Ausnehmung oder Bohrung in der Gehäusewand erreichen. Üblicherweise ist die Aussparung zur Aufnahme des Dichtrings in der Gewindehülse angeordnet, da sie dort vergleichsweise einfach gefertigt werden kann und ein an dieser Stelle positionierter Dichtring bei demontierter Sondenhalterung leicht auszuwechseln ist. Der elastische Dichtring, der ohne den Einfluss äußerer Kräfte über die (bezogen auf die Mittelachse der Gewindehülse) innen liegende und die außen liegende umlaufende Kante der Aussparung hinausragt, ist zweckmäßigerweise derart dimensioniert, dass er beim Verfestigen des Feststellelementes ganz in die Aussparung hineingepresst wird, sprich, bündig mit diesen beiden Kanten abschließt. Damit bleibt die Kalibrierfunktion der Anschlagfläche im Bereich außerhalb der Aussparung erhalten. Insbesondere kann die Gewindehülse damit präzise und unabhängig vom Grad der Verformung oder Verquetschung des Dichtringes eine jederzeit genau reproduzierbare Referenzposition in der Gehäusewand einnehmen.

Zur sicheren Arretierung der Gewindehülse in ihrer Referenzposition ist ein Feststellelement vorgesehen, das in der Art eines Klemm- oder Rastverschlusses ausgeführt sein kann. In einer bevorzugten Ausgestaltung weist das Sondenhalterungssystem jedoch einen von außen in die Gehäusewand schraubbaren Einschraubstutzen auf. Dabei ist der innen hohle, den Trägerstab umgebende Schaft des Einschraubstutzens mit einem Außengewinde versehen, das zu einem Innengewinde in der für die Aufnahme des Einschraubstutzens vorgesehenen Ausnehmung in der Gehäusewand korrespondiert. Im fertig montierten Zustand des Sondenhalterungssystems berührt die zur Gewindehülse orientierte Stirnfläche bzw. die umlaufende Kantenfläche des eingeschraubten und verspannten Einschraubstutzens eine ihr zugewandte Auflagefläche der Gewindehülse und übt gegebenenfalls Druck auf sie aus, wodurch die Gewindehülse in ihrer Referenzposition in der Gehäusewand fixiert wird. Bei entsprechend geformter Außenkontur der Gewindehülse, d.h. sofern die Auflagefläche für den Einschraubstutzen einen Vorsprung bildet, kann der auf der Innenseite glatte Schaft des Einschraubstutzens in der arretierten Position die Gewindehülse zumindest teilweise umschließen, wobei die Außenseite der Gewindehülse und die Innenseite des Schaftes vorzugsweise mit einer Spielpassung zueinander ausgeführt sind. Das heißt, in dem betreffenden Abschnitt wird der Trägerstab über die Gewindehülse und den die Gewindehülse ummantelnden Schaft des Einschraubstutzens an der Gehäusewand zusätzlich abgestützt und zentriert.

Ein unbeabsichtigtes Verdrehen des Trägerstabes und eine damit einhergehende Dejustierung der Sonde kann durch eine hinreichend schwer gängige Ausführung des Gewindes vermieden werden. Um auch bei einem Gewinde, das für eine einfache Justierung des Trägerstabes bei verträglichem Kraftaufwand ausgelegt ist, eine unbeabsichtigte Verstellung, beispielsweise durch Erschütterungen oder dergleichen, zu unterbinden, ist das Sondenhalterungssystem vorzugsweise mit einer bei Bedarf lösbaren Verdrehsicherung für den Trägerstab versehen.

Vorteilhafterweise ist als Bestandteil der Verdrehsicherung eine auf dem Trägerstab schraubbare Kontermutter vorgesehen. Sie kann so angeordnet sein, dass sie direkt auf das zum Äußeren des Gehäuses gerichtete Ende der Gewindehülse einwirkt. In einer bevorzugten Alternativausführung ist zwischen der Kontermutter und der Gewindehülse eine Abstandshülse verschieblich auf dem Trägerstab angeordnet. Diese Variante ist bzgl. einer einfachen Zugänglichkeit der Kontermutter insbesondere dann vorteilhaft, falls die Gewindehülse in ihrer Referenzposition vollständig in der Ausnehmung der Gehäusewand versenkt ist, und/oder falls ein Einschraubstutzen der beschriebenen Art als Feststellelement für die Gewindehülse vorgesehen ist. Bei verdrehgesichertem Trägerstab liegt die Abstandshülse auf der Gewindehülse auf und ist mittels der angezogenen Kontermutter gegen die Gewindehülse verspannt. Die Kontermutter ist unabhängig vom Feststellelement, das insbesondere in der oben beschriebenen Art als Einschraubstutzen ausgeführt sein kann, bedienbar, so dass eine einmal eingestellte und mittels der Kontermutter fixierte Justierung des Trägerstabes in der Gewindehülse auch bei einem vorübergehenden Ausbau bzw. einer Entnahme der Sondenhalterung aus der Gehäusewand beibehalten werden kann.

Vorzugsweise weist die zum Trägerstab und zur Gewindehülse orientierte umlaufende Kante am zur Gewindehülse gerichteten Ende der Abstandshülse eine umlaufende Aussparung zur Aufnahme eines Dichtrings auf, in der zweckmäßigerweise ein Dichtring positioniert ist. Dadurch wird die Abstandshülse sowohl gegen den Trägerstab als auch (bei angezogener Kontermutter) gegen die Gewindehülse abgedichtet. In Kombination mit dem an der Außenseite der Gewindehülse vorgesehenen Dichtring werden damit auf einfache und konstengünstige Weise sämtliche Leckagemöglichkeiten für Öl oder andere die Messstelle umgebende Flüssigkeiten zuverlässig abgedichtet.

Für den Fall, dass als Feststellelement für die Gewindehülse ein Einschraubstutzen der angegebenen Art vorgesehen ist, sind Form und Abmessung des Einschraubstutzens und der Abstandshülse vorzugsweise derart gewählt, dass die Abstandshülse im montierten Zustand des Sondenhalterungssystems zumindest teilweise in einen von dem Trägerstab und der Innenseite des Einschraubstutzens begrenzten Hohlraum eingreift, wobei insbesondere die Abstandshülse mit einer Spielpassung zum Trägerstab und zum Einschraubstutzen gefertigt ist. Eine derartige Konstruktion erhöht die mechanische Stabilität der gesamten Anordnung und unterbindet wirkungsvoll ein Verkippen des Trägerstabes aus seiner zentrischen Position.

Um sicherzustellen, dass der Einschraubstutzen auch bei verriegelter Verdrehsicherung, d. h. bei angezogener Kontermutter, vollständig aus dem Gehäuse geschraubt werden kann, ist der freie Innenquerschnitt des Einschraubstutzens vorzugsweise mindestens so groß wie der Außenquerschnitt der Kontermutter. Mit anderen Worten: Die Kontermutter weist keinen störenden Überstand auf, so dass der Einschraubstutzen über diese hinweggeschoben oder gedreht werden kann. In einer bevorzugten Alternativausführung, bei der der Außenquerschnitt der Kontermutter auch größer als der freie Innenquerschnitt des Einschraubstutzens sein kann, ist der bei verriegelter Verdrehsicherung und fest gezogenem Einschraubstutzen über den Kopf des Einschraubstutzens hinausragende Teil der Abstandshülse mindestens so lang wie der in die Gehäusewand versenkte Schaft des Einschraubstutzens. Auch bei dieser Konstellation lässt sich der Einschraubstutzen vollständig und problemlos von der Gehäusewand lösen.

Vorzugsweise ist am zum Gehäuseinneren hin gerichteten Ende des Trägerstabs eine Sonde, insbesondere eine Sonde zur Wellenüberwachung, angeordnet. An die Sonde angeschlossene Kabel oder Leitungen können in den Trägerstab integriert sein und auf diese Weise nach außen geführt werden. An dem der Sonde bzw. dem Messfühler gegenüberliegenden Ende des Trägerstabes kann ein Anschlusskopf für den externen Anschluss bzw. die Verkabelung der Sonde vorgesehen sein.

Die zur Aufnahme der Sondenhaltung, also insbesondere zur Aufnahme der Gewindehülse, vorgesehene Ausnehmung kann auch in einem Adapterbauteil angeordnet sein, das seinerseits in eine ihm zugeordnete Ausnehmung der Gehäusewand eingebracht ist. Dabei ist das Adapterteil vorzugsweise fest und dauerhaft mit der Gehäusewand verbunden und kann somit als ein Bestandteil derselben aufgefasst werden. Die Verwendung eines derartigen Adapters erweist sich insbesondere bei vergleichsweise geringen Gehäusewandstärken als sinnvoll. Auch bei Altmaschinen mit bereits bestehenden Ausnehmungen oder Bohrlöchern, die jedoch bezüglich ihrer jeweiligen Dimension ursprünglich nicht auf ein nun zur Nachrüstung vorgesehenes Sondenhalterungssystem abgestimmt waren, kann der Einsatz von Adapterstücken notwendig sein.

Bezüglich des Verfahrens zum Justieren einer Sonde wird die Aufgabe gelöst, indem der Trägerstab für die Sonde gegenüber der Gewindehülse, in die er hineingeschraubt ist, verdreht wird, wodurch sich die Lage der Sonde relativ zur Gewindehülse ändert. Vorzugsweise wird diese Justierung oder Kalibrierung bei einem bereits an der Gehäusewand befestigten Sondenhalterungssystem vorgenommen, wobei sich das Feststellelement für die Gewindehülse in arretierter Stellung befindet. Auf diese Weise kann die Sonde direkt vor Ort mit hoher Präzision bzgl. des Messobjektes ausgerichtet werden. Das Feststellelement verhindert dabei durch den Druck, den es auf die Gewindehülse ausübt ein ungewolltes Wegdrehen oder Mitdrehen derselben. Führungszapfen oder Stege oder dergleichen zum Festhalten der Gewindehülse während des Justiervorganges sind daher nicht notwendig.

Zum Befestigen des Sondenhalterungssystems wird die Gewindehülse mit dem eingeschraubten und ggf. bereits justierten sowie verdrehgesicherten Trägerstab in die korrespondierende Ausnehmung der Gehäusewand eingeschoben und anschließend über das Feststellelement arretiert. Die Demontage erfolgt sinngemäß in umgekehrter Reihenfolge.

Die mit der Erfindung erzielten Vorteile bestehen insbesondere darin, dass das Sondenhalterungssystem durch die bewusste Entkopplung von zur Befestigung und zur Justierung dienenden Funktionseinheiten besonders leicht und schnell an einem Gehäuse angebracht werden kann und dabei eine besonders präzise Positionierung einer Sonde zulässt. Bei insgesamt vergleichsweise einfach gehaltener Herstellung und einfacherer Handhabbarkeit bleibt eine einmal, insbesondere bei der Erstmontage, vorgenommene Justierung der Sonde auch bei einer vorübergehenden, z. B. wartungsbedingten Demontage der Halterung erhalten, so dass beim Wiedereinbau der ursprüngliche Abstand der Sonde zum Messobjekt automatisch und besonders präzise reproduziert wird. Damit kann eine Nachjustierung des Sondenhalterungssystems entfallen, wodurch die Montagezeiten erheblich verkürzt werden.

Bei Bedarf kann die Sonde mitsamt ihrer Halterung auch an einer anderen Messstelle der jeweiligen Maschine oder auch bei einer anderen Maschine eingesetzt werden, wobei in der Regel eine Neujustierung notwendig wird. Für eine präzise Justierbarkeit der Sonde genügt es, die Gewindehülse und den Trägerstab mit einem Feingewinde zu versehen, wobei die Fertigungstoleranzen und die Spielpassungen der übrigen Bauteile durchaus vergleichsweise großzügig gehalten werden können. Insbesondere lässt sich die zur Aufnahme der Gewindehülse jeweils in der Gehäusewand vorgesehene Ausnehmung vergleichsweise einfach und mit vergleichsweise geringen Präzisionsanforderungen mit einem genormten Bohrwerkzeug herstellen. Die Anordnung der Ringdichtungen bewirkt zudem eine sehr effektive und kostengünstige Abdichtung des Systems, auch wenn innerhalb der Maschine Überdruck herrscht.

Der vergleichsweise große Verstellbereich der Sondenhalterung ermöglicht den Einsatz ein und desselben Typs an einer Vielzahl unterschiedlicher Messstellen mit variierender Distanz zum umgebenden Gehäuse. Daher kann die Variantenzahl beim angegebenen Sondenhalterungssystem auch bei unterschiedlichen Verwendungszwecken gering gehalten werden. Dabei arbeitet der Verstellmechanismus ausgesprochen feingängig und exakt. Zudem kann das Sondenhalterungssystem insgesamt vergleichsweise kompakt ausgeführt werden, wodurch sich Bauteilkollisionen mit angrenzenden Bauteilen, etwa bei geringem Einbauraum, vermeiden lassen und sich der Einsatzbereich des Sondenhalterungssystems vergrößert.

Neben der Wellenüberwachung kann das Sondenhalterungssystem auch noch in anderen Bereichen verwendet werden, in denen ein Messfühler in einer Solldistanz zu einer Messstelle innerhalb eines Gehäuses oder eines Behälters oder an einem Rahmen angeordnet werden soll, wobei die zu überbrückende Distanz zwischen dem jeweiligen Messfühler und der zur Befestigung dienenden Gehäusewand oder dem Rahmen von Messstelle zu Messstelle oder von Maschine zu Maschine unterschiedlich sein kann. Ein Beispiel für einen derartigen Einsatzbereich stellt die Vermessung von Karosserieteilen in der Automobilindustrie dar, bei der Messfühler zur Qualitätskontrolle verwendet werden.

Ein Ausführungsbeispiel der Erfindung wird anhand einer Zeichnung näher erläutert. Darin zeigt die FIG einen Halbschnitt durch ein an einem Gehäuse befestigtes Sondenhalterungssystem.

Das Sondenhalterungssystem 1 gemäß der FIG ist zur Befestigung einer Sonde 2 an einem Gehäuse 4 einer nicht näher dargestellten Maschine vorgesehen. Die Sonde 2 wird dabei zu einer Drehzahlmessung einer vom Gehäuse 4 umgebenen Welle 6 verwendet, wobei die Welle 6 zur Verringerung der Reibung und zur Kühlung in Öl O gelagert ist. Dabei übersteigt der im Inneren des Gehäuses 4 herrschende Öldruck den Umgebungsdruck außerhalb der Maschine bzw. des Gehäuses 4. Für eine möglichst hohe Messgenauigkeit bei der Drehzahlmessung ist die Sonde 2 in einer vergleichsweise geringen radialen Distanz zur Welle 6 von 1,5 mm positioniert, wobei die zulässige Toleranz nur ± 0,1 mm beträgt.

Die eigentliche Sonde 2 bzw. der Messfühler ist kopfseitig an einem Trägerstab 8 angeordnet, der von außen in eine korrespondierende Ausnehmung 10 der Gehäusewand eingebracht und zu Wartungszwecken auch wieder herausgenommen werden kann. Dem Sondenkopf 12 gegenüberliegend ist ein Anschlusskopf 14 am Trägerstab 8 vorgesehen, über den die externe Verkabelung der Sonde 2 erfolgen kann.

Das Sondenhalterungssystem 1 ist bei einem einfachen Aufbau insbesondere dafür ausgelegt, dass sich einerseits die Sonde 2 bzw. der Sondenkopf 12 bezüglich der Distanz zur Welle 6 besonders genau montieren lässt, und dass andererseits bei einem Aus- und Wiedereinbau eine Nachjustierung der Anordnung vermieden werden kann. Das Sondenhalterungssystem 1 ist also derart ausgeführt, dass sich die ursprüngliche Distanz zwischen dem Sondenkopf 12 und der Welle 6 bei einem Wiedereinbau möglichst einfach und genau reproduzieren lässt.

Hierfür ist das Sondenhalterungssystem 1 mit einer ein Innengewinde aufweisenden Gewindehülse 16 zur Aufnahme des Trägerstabs 8 versehen, die bis zu einer exakt definierten Referenzposition in eine korrespondierende Ausnehmung 10 der Gehäusewand eingebracht ist. Dabei ist die Außenkontur der Gewindehülse 16 an ihrer zum Gehäuseinneren bzw. zur Sonde 2 gerichteten Stirnseite an die Form der sich in einem Übergangsbereich trichterförmig verjüngenden und auf diese Weise eine Anschlagfläche 18 für die Gewindehülse 16 ausbildenden Ausnehmung 10 angepasst. Somit ist in der Anschlagposition ein zentrischer und kippstabiler Sitz der Gewindehülse 16 mitsamt dem in ihr gelagerten Trägerstab 8 sichergestellt.

Am zur Außenseite des Gehäuses 4 bzw. zum Anschlusskopf 14 gerichteten Ende ist der äußere Querschnitt der Gewindehülse 16 gegenüber dem freien Querschnitt der Ausnehmung 10 verringert, so dass sich zwischen den jeweiligen Berandungsflächen ein zur Aufnahme eines Einschraubstutzens 20 dienender Zwischenraum ausbildet. Zur Arretierung der Gewindehülse 16 in ihrer Referenzposition ist der mit einem Außengewinde versehene Einschraubstutzen 20 so weit in die Ausnehmung 10 eingeschraubt, dass er auf einen umlaufenden Absatz 22 der Gewindehülse 16 aufliegt und einen Anpressdruck auf ihn ausübt.

Für einen Aus- und Wiedereinbau der bezüglich der Welle 6 kalibrierten Sonde 2, ohne dabei die Kalibrierung zu beeinflussen bzw. zu verändern, wird der Einschraubstutzen 20 gelöst und aus der Ausnehmung 10 der Gehäusewand herausgeschraubt, so dass sich der mit der Gewindehülse 16 verbundene Trägerstab 8 mitsamt der Sonde 2 aus der Ausnehmung 10 herausziehen lässt.

Um zu vermeiden, dass der im Inneren des Gehäuses 4 herrschende Öldruck zu Leckagen führt, ist zwischen der Gewindehülse 16 und der trichterförmigen Anschlagfläche 18 der Ausnehmung 10 ein Dichtring 24 in einer umlaufenden Aussparung der Gewindehülse 16 positioniert. Dabei nimmt die Aussparung für den Dichtring 24 an der Gewindehülse 16 nur einen Teil ihrer Auflagefläche ein, so dass der präzise Anschlag der restlichen Auflagefläche an der zugeordneten Anschlagfläche 18 der Ausnehmung 10 erhalten bleibt.

Als Verdrehsicherung für den Trägerstab 8 ist eine zwecks einer besseren Zugänglichkeit durch eine Abstandshülse 26 von der Gewindehülse 16 beabstandete Kontermutter 28 vorgesehen, die auf den Trägerstab 8 geschraubt ist. Die Abstandshülse 26 weist den gleichen Außendurchmesser auf wie die Gewindehülse 16 und wird im montierten und fixierten Zustand des Sondenhalterungssystems 1 zumindest teilweise vom Einschraubstutzen 20 ummantelt. Zur Abdichtung der Anordnung ist stirnseitig in einer umlaufenden Aussparung der Abstandshülse 26 ein an der Gewindehülse 16 und an dem Trägerstab 8 anliegender Dichtring 30 positioniert.

Für eine Justierung bzw. Kalibrierung der Sonde 2 bezüglich ihres Abstandes zur Welle 6 wird der Trägerstab 8 bei gelöster Kontermutter 28 in der Gewindehülse 16 verschraubt, bis sich die Solldistanz zwischen dem Sondenkopf 12 und der Welle 6 einstellt. Anschließend wird diese Position durch das Verspannen der Kontermutter 28 gegenüber der auf der Gewindehülse 16 aufliegenden Abstandshülse 26 fixiert.

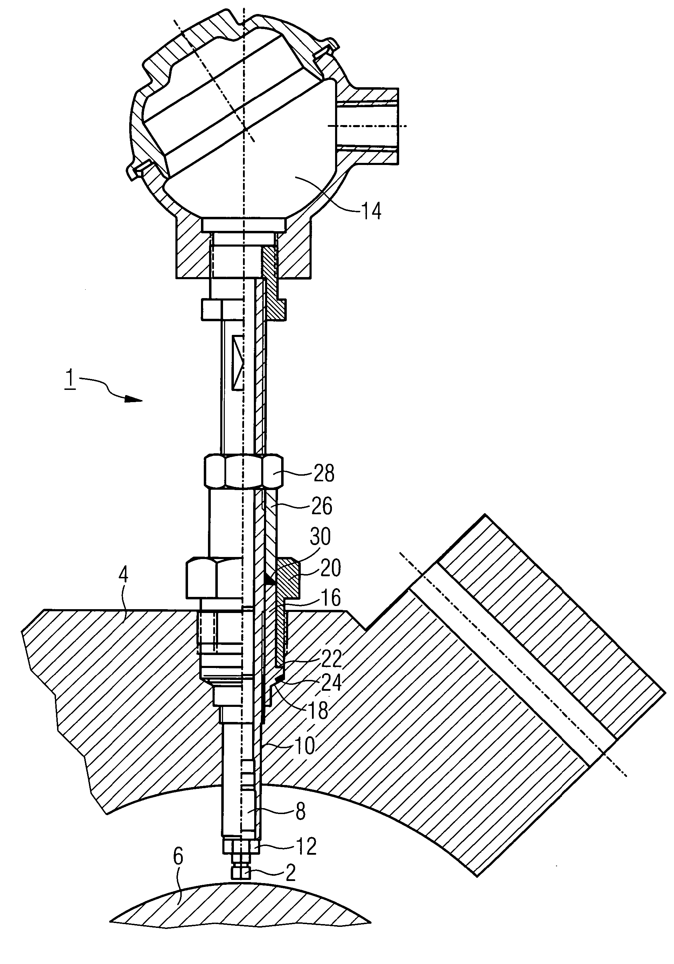

## Patentansprüche

1. Sondenhalterungssystem (1) zur Befestigung einer Sonde (2) an einer Gehäusewand mit einer ein Innengewinde aufweisenden Gewindehülse (16) und mit einem in die Gewindehülse (16) schraubbaren Trägerstab (8) für die Sonde (2), wobei die Gewindehülse (16) in eine Referenzposition in einer Ausnehmung (10) der Gehäusewand einbringbar ist und in dieser über ein Feststellelement arretierbar ist.

2. Sondenhalterungssystem (1) nach Anspruch 1, bei dem in der Ausnehmung (10) der Gehäusewand eine Anschlagfläche (18) für die Gewindehülse (16) vorgesehen ist.

3. Sondenhalterungssystem (1) nach Anspruch 2, bei dem die Anschlagfläche (18) durch einen trichterförmigen Verjüngungsabschnitt der Ausnehmung (10) gebildet ist.

4. Sondenhalterungssystem (1) nach Anspruch 2 oder 3, bei dem die Gewindehülse (16) eine an die Form der Ausnehmung (10) angepasste Außenkontur aufweist.

5. Sondenhalterungssystem (1) nach einem der Ansprüche 2 bis 4, bei dem in der Anschlagfläche (18) der Gehäusewand oder in der zur Anschlagfläche (18) gerichteten Stirnseite der Gewindehülse (16) eine umlaufende Aussparung zur Aufnahme eines Dichtringes (24) vorgesehen ist.

6. Sondenhalterungssystem (1) nach Anspruch 5, bei dem in der Aussparung ein Dichtring (24) positioniert ist.

7. Sondenhalterungssystem (1) nach einem der Ansprüche 1 bis 6, bei dem als Feststellelement ein in die Ausnehmung (10) schraubbarer Einschraubstutzen (20) vorgesehen ist.

8. Sondenhalterungssystem (1) nach einem der Ansprüche 1 bis 7 mit einer lösbaren Verdrehsicherung für den Trägerstab (8).

9. Sondenhalterungssystem (1) nach Anspruch 8, bei dem als Bestandteil der Verdrehsicherung eine auf den Trägerstab (8) schraubbare Kontermutter (28) vorgesehen ist.

10. Sondenhalterungssystem (1) nach Anspruch 9, bei dem eine verschieblich auf dem Trägerstab (8) angeordnete Abstandshülse (26) zwischen der Kontermutter (28) und der Gewindehülse (16) vorgesehen ist.

11. Sondenhalterungssystem (1) nach Anspruch 10, bei dem die zum Trägerstab (8) und zur Gewindehülse (16) orientierte Kante am zur Gewindehülse (16) gerichteten Ende der Abstandshülse (26) eine umlaufende Aussparung zur Aufnahme eines Dichtrings (24) aufweist.

12. Sondenhalterungssystem (1) nach Anspruch 11, bei dem in der Aussparung ein Dichtring (24) positioniert ist.

13. Sondenhalterungssystem (1) nach einem der Ansprüche 10 bis 12 in Verbindung mit Anspruch 7, bei dem die Abstandshülse (26) in einen von dem Trägerstab (8) und der Innenseite des Einschraubstutzens (20) begrenzten Zwischenraum eingreift.

14. Sondenhalterungssystem (1) nach Anspruch 13, bei dem der freie Innenquerschnitt des Einschraubstutzens (20) mindestens so groß ist wie der Außenquerschnitt der Kontermutter (28).

15. Sondenhalterungssystem (1) nach Anspruch 13 oder 14, bei dem bei verriegelter Verdrehsicherung und festgezogenem Einschraubstutzen (20) der über den Kopf des Einschraubstutzens (20) hinausragende Teil der Abstandshülse (26) mindestens so lang ist wie der in die Gehäusewand versenkte Schaft des Einschraubstutzens (20).

16. Sondenhalterungssystem (1) nach einem der Ansprüche 1 bis 15 mit einer am zum Gehäuseinneren hin gerichteten Ende des Trägerstabes (8) angeordneten Sonde (2), insbesondere einer Sonde (2) zur Wellenüberwachung.

17. Verfahren zum Justieren einer an einem Sondenhalterungssystem (1) nach einem der Ansprüche 1 bis 16 befestigten Sonde (2), bei dem der Trägerstab (8) gegenüber der Gewindehülse (16) verdreht wird.

18. Verfahren nach Anspruch 17, bei dem die Verdrehung des Trägerstabes (8) bei an der Gehäusewand montiertem Sondenhalterungssystem (1) mit arretiertem Feststellelement vorgenommen wird.

19. Verfahren zum Befestigen eines Sondenhalterungssystems (1) nach einem der Ansprüche 1 bis 16 an einer Gehäusewand, bei dem die Gewindehülse (16) in die Referenzposition in der Ausnehmung (10) der Gehäusewand eingeschoben und anschließend über das Feststellelement arretiert wird.
